# EUROPEAN PATENT APPLICATION

(11) **EP 0 556 536 A1**
(43) Date of publication of application: **25.08.1993**
(21) Application number: 92830286.8
(22) Date of filing: 02.06.1992
(51) Int. Cl.: B60B 29/00

(54) **Device for loosening or screwing tight the fixing bolts of a wheel of a motor vehicle, with direct coupling to the wheel**

(30) Priority: 18.02.1992 IT RM920042 U
(71) Applicant: Greggi, Marco, I-02036 Passo Corese (RI) (IT); Cavalletti, Fabio, I-00012 Setteville di Guidonia (RM) (IT)
(72) Inventor: Greggi, Marco, I-02036 Passo Corese (RI) (IT); Cavalletti, Fabio, I-00012 Setteville di Guidonia (RM) (IT)
(74) Representative: Fiammenghi-Domenighetti, Delfina

(57) **Abstract**

Device for loosening or screwing tight the fixing bolts of a wheel of a motor vehicle, which is directly coupled to the wheel, comprising a housing having substantially the form of a parallelepiped, a socket wrench (9) and a sleeve (6) which is fixed at the end of an adjustable arm (4), the socket wrench (9) engaging a fixing bolt of the wheel to be loosened or tightened, the sleeve (6) serving to guarantee the stability of the housing (1) of the device during the loosening or tightening of the aforementioned bolt, by engaging another fixing bolt of the wheel.
The housing contains a reduction gear assembly allowing to loosen or to screw tight the bolt, by rotating a crank (10) and applying a minimal effort.

## Description

The present invention relates to a device for the replacement of wheels in a motor vehicle, and in particular to a device for loosening or screwing tight the fixing bolts of a wheel by employing a minimal effort.

Devices of this type are known, and they comprise a reduction gear, an actuating shaft connected to a crank, and an output shaft for engaging the head of the bolt to be loosened or tightened by means of a socket wrench integral to said output shaft.

The great majority of said known devices has several disadvantages, since they need the use of an arm which must be laid on the ground in order to oppose the torque produced during loosening or tightening of the bolt. Said arm is relatively cumbersome so that the device is not handy.
Furthermore, the length of the arm must be adjustable, if the motor vehicle has already been lifted, and in this latter case the device may displace the motor vehicle.
It is an object of the present invention, to provide a more convenient device, which is lighter and more efficient, and which must not be laid on the ground.
This object is attained as described in the following description, and as defined in the claims at the end of the present description.

The present invention will be described with reference to the annexed drawings, wherein:
Fig. 1 is a perspective view of the device, which contains in its internal part the reduction gear assembly;
Fig. 1a is a perspective view of the upper part of the device;
Fig. 2 is an exploded view of the device, with its upper part taken away;
Fig. 3 shows the lower face of the spur gear, which forms the final stage of the reduction gear assembly, and which comprises a plurality of teeth with inclined surfaces;
Fig. 4 shows a plurality of teeth which realize a coupling between the spur gear and an annular element included in the reduction gear assembly:
Fig. 5 shows a second embodiment of the present invention.

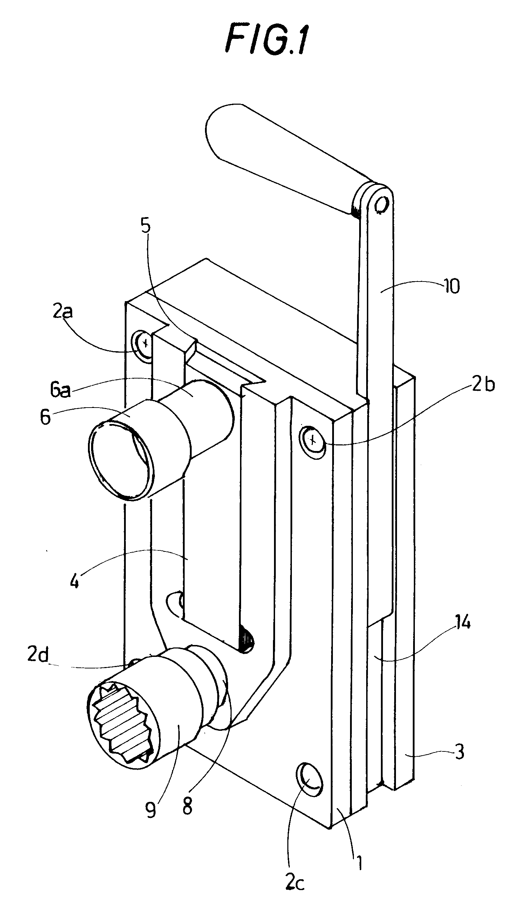

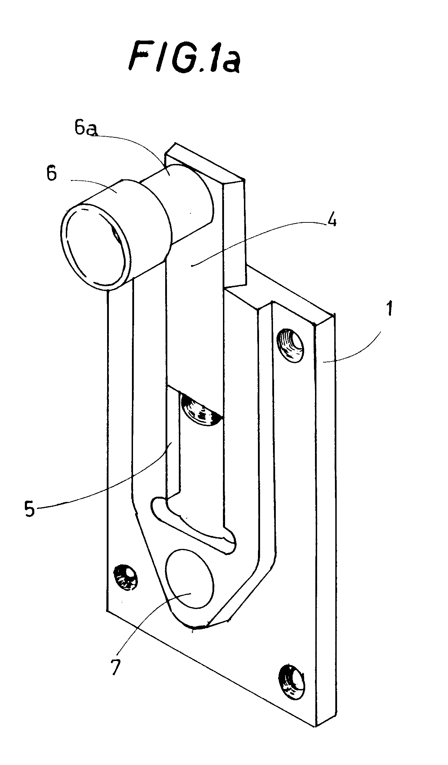

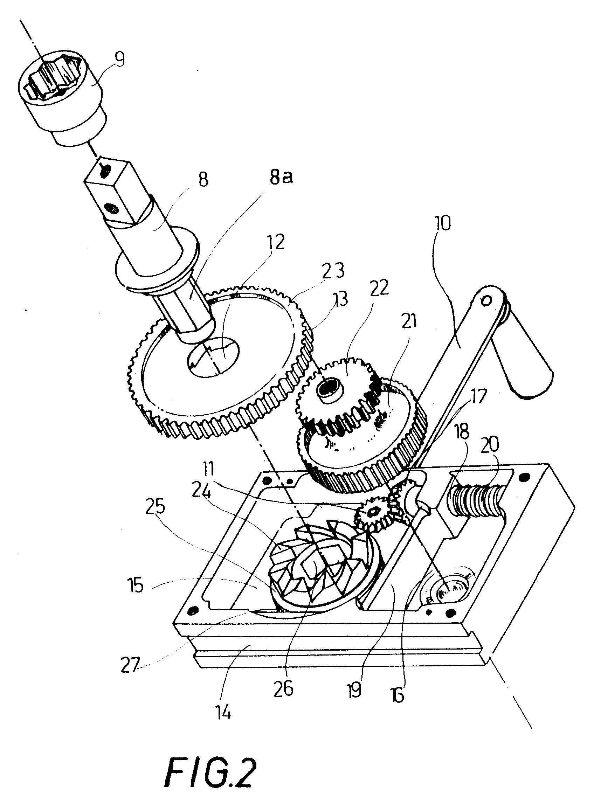

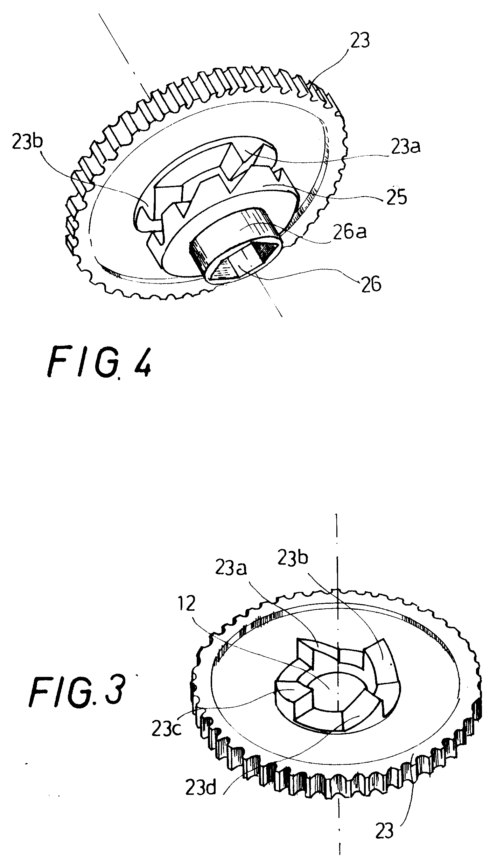

As shown in Fig. 1, the device comprises a housing formed by an upper part 1, secured to the lower part 3, by means of four screws 2a-2d, at the four corners of the latter. The upper part 1, comprises an arm 4 slidable inside a trapezoidal guiding slot 5. A bush 6 is fixed at the end of the arm 4, forming a right angle with the latter, by means of a cylindrical linking element 6a.
The output arm 8 is lead through the hole 7 on the upper part 1 (Fig. 1a), and, by means of a socket wrench 9, it transmits the loosening or tightening force exerted on the crank 10, which is located on the lower part of the device (Fig. 2).
As shown in Fig. 1, the output shaft 8 and the cylindrical linking element 6a, and therefore also the socket wrench 9 and the bush 6, are all located along the longitudinal symmetry axis of the device's housing.
Such a device, as compared with a diagonal arrangement, in which the straight line joining the bush 6 and the socket wrench 9 doesn't coincide with the longitudinal simmetry axis of the device, allows a quicker connection of the device to the wheel, as will be readily understood further on, when the operation of the device is described. Furthermore, this arrangement allows a more suitable distribution of the forces on the device housing as compared to an asymmetric arrangement.
The crank 10 rotates a pinion 11 making up the first stage of the reduction gear assembly.
The coupling between the socket wrench 9 and the output shaft 8 is a click type coupling, that is the socket wrench 9 is plugged in the free end of the output shaft 8 until a click is heard, and with this coupling the socket wrench 9 may be replaced by another socket wrench, which mates with another bolt or nut of different size.
The output arm 8 is lead through a hole 12 on the spur gear 13 making up the last stage of the reduction gear assembly (Fig. 2).
The operation of the device of the present invention will be now briefly described, whereas the operation of the reduction gear assembly will be described in detail further on, with reference to Figs. 2 and 3, together with all elements of the reduction gear assembly which are arranged between pinion 11 and spur gear 13, which respectively constitute the first and final stage of the reduction gear assembly.
In order to remove a wheel, the device is put near the tire rim, engaging the socket wrench 9 with the head of the bolt to be loosened or tightened, and at the same time, the bush 6 is plugged into another fixing bolt which has already been loosened or which will be loosened subsequently, said operations being carried out after an adequate adjustment of the length of that part of the arm 4, which projects out of the upper part 1 of the device. The adjustment is carried out by letting the arm 4 slide along the trapezoidal guiding slot 5. As compared to an analogous device in which the arm 4 and the bush 6 are not along the longitudinal symmetry axis of the device, this embodiment has the advantage to allow an easier engagement of the bolt, because the different length of the arm 4 doesn't modify the size of the angle between the straight line joining the socket wrench 9 and the bush 6, and the longitudinal axis of the device.
The crank 10 will be now actuated, in order to loosen or tighten the bolt by means of a minimal effort, as a consequence of the elevated reduction ratio of the reduction gear assembly.
The motor vehicle is not sensibly pushed, since the reaction force is transmitted only to the wheel, because of the connection between the device of the present invention and the wheel, which is realized by means of the socket wrench 9 and the bush 6, together with the respective bolts, i.e. the bolt to be loosened (or tightened, if the wheel is to be mounted) and the fixing bolt.
Advantageously, as shown in Fig. 1, the housing of the device, which comprises the upper part 1 fixed to the lower part 3, has a lateral seat 14 constituted by a guiding slot, in which the whole length of the crank's arm is shifted (in the figure the crank's arm is in an intermediate position), after the crank has been removed from a connection element which connects it to the pinion 11, at the end of the loosening or tightening operations (this connection element is not shown in the figures, since it is hidden by the device's housing).
In this way it is avoided to put the crank in a separate place, the device being less cumbersome when it is not used. As already mentioned, and this is a fundamental characteristic of this embodiment of the invention, the alignment along the longitudinal axis of the device, of the bush 6 and socket wrench 9, facilitates the connection of the device to the wheel, with respect to an asymmetric arrangement. Furthermore, the device is not overstrained by the internal stresses produced by the torque during loosening or tightening of the bolt.

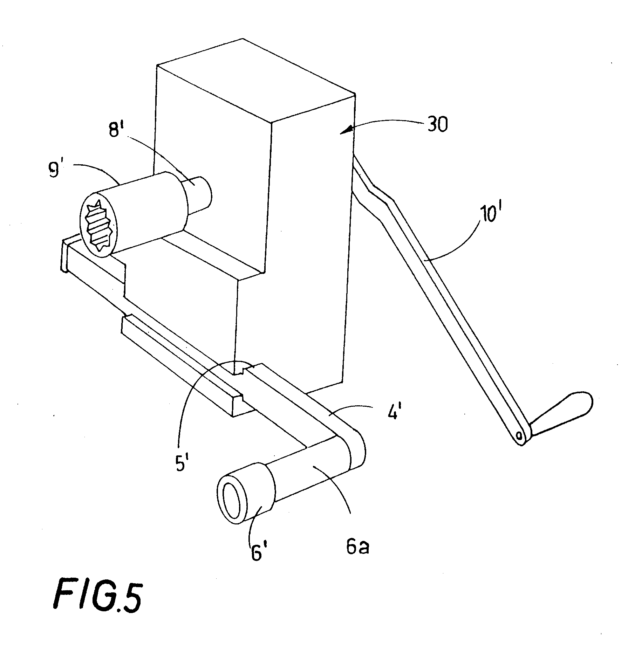

The reduction gear assembly will now be described, reference being made to Figs. 2 and 3.
As shown in Fig. 2, the interior of the device's housing comprises two separate spaces 15, 16 which substantially divide the interior of the housing into equal rooms. In the first space 15, is rotatably mounted the pinion 11 connected to the actuating crank 10. Pinion 11 is constituted by a bevel gear which transmits the rotational motion of the crank 10 to another bevel gear 17 integral with a spindle 18, the latter extending itself between the two spaces 15, 16, through a cylindrical aperture made on the parting wall 19 of the spaces 15, 16. The shaft 18 comprises a worm 20, which transforms the motion of the spindle 18 in a rotational motion about an axis orthogonal to said spindle 18, by rotating a spur gear 21, which is integral with a spur gear 22 having a smaller radius.
The spur gear 22 engages a spur gear 23 having a greater radius.
The spur gear 23 comprises on its lower face four teeth 23a, 23b, 23c, 23d, spaced at 90° from each other, and having a section like that of a right-angled triangle. The teeth 23a, 23b, 23c, 23d engage the eight teeth 24 having a trapezoidal section, which are disposed along a circumference on an annular element 25, the latter having an hexagonal aperture 26. The output shaft 8 has on its lower end a prismatic portion 8a with an hexagonal section, which engages the hexagonal aperture of the annular element, so that the spur gear 23 will be enclosed between the annular element 25 and the output shaft 8 itself.
The hexagonal aperture 26 extends downwardly forming a sleeve 26a which fits into a plurality of cup springs 27 placed one above the other.
When the crank 10 is actuated, the spur gear 23 will start rotating, and because of the engagement between the teeth 23a,b,c,d and the eight trapezoidal teeth 24, the output shaft 8 will also start rotating. When the tightening i.e. screwing torque will have surpassed a predetermined limit, the output shaft 8 will oppose a well defined resistance to a further tightening, and the inclined surfaces of the teeth 23a-23d disposed on the lower face of spur gear 23 will slide along the inclined surfaces of the trapezoidal teeth of annular element 25, as shown in Fig. 4, so that the cup springs 27 will be compressed and the teeth 23a-23d will surpass the flat surfaces of trapezoidal teeth 24. This very instant, the user will hear a click, the teeth 23a-23d will again engage the teeth 24, and it will be impossible to exert a greater torque on the bolt.
In other words, the engagement between the teeth and the presence of the (appropriately calibrated) cup springs, give rise to a torque limiter.
By rotating the crank in the opposite direction, i.e. loosening the bolt, there obviously exists no theoretical limit to the loosening torque.
The present invention allows, after an appropriate calibration of the cup springs 27, to realize a torque limiter which is suited to various real circumstances that may occur.
According to another embodiment of the present invention, shown in Fig. 5, the device is formed by a housing 30, having a T-slot 5', inside which an arm 4' may slide.
A bush or sleeve 6'is fixed by means of a cylindrical linking element 6a to an end of the arm 4', its axis forming a right angle with respect to the arm 4'.
A socket wrench 9' is plugged into the output arm 8' until a click is heard, but it may also be integral with the latter.
Evidently, the click mechanism is preferred, for the sleeve 9' may be replaced by an analogous sleeve, having a larger or smaller diameter, and which is suited to different types of bolts.
The reduction gear assembly is made, in this embodiment, by two pairs of gears with an overall reduction ratio of 60:1, and it will not be described in detail since it is known and may be realized by every designer engineer.
The output shaft 8' is rotated by the crank 10', the operation of this second embodiment of the device is the same as before (Figg. 1-4), the socket wrench 9' engaging the bolt to be loosened or tightened, and the bush 6' engages the fixing bolt connecting the device to the wheel.
As shown in Fig. 5, the actuating shaft is coaxial to the output shaft 8', in contrast to the first embodiment.
Furthermore, the straight line joining the socket wrench 9' and the bush or sleeve 6', doesn't coincide with the longitudinal axis of the device, and the amplitude of the angle between this longitudinal axis and said straight line joining the socket wrench 9' and the bush 6', is changed after adjustment of the sliding arm 4'. With reference to what has already been said above, the device of the first embodiment is preferred, but obviously, both devices solve the same problem, which consists in applying the torque directly to the wheel without using cumbersome means which may also displace the motor vehicle when the latter has already been lifted from the ground.

The device is particularly useful because of its extraordinarily closed form and because of the possibility to adapt it to different types of wheels, due to the fact that the arm 4 is adjustable and the socket wrench 9 may be replaced. Furthermore, according to a modified embodiment, there is also the possibility of replacing the sleeve 6 engaging the fixing bolt, by providing a coupling in every aspect like that described above between the output shaft 8 and the socket wrench 9.
Furthermore, the rotation of the pinion 11 could also be caused, instead of by the action excerted by the crank 10, by an electrical motor, which could be arranged inside the device's housing containing the reduction gear assembly.
At least, according to a preferred modification, one may provide a lighting device integral with the housing of the present device, and directed against the rim of the wheel in order to illuminate it, allowing the use of the device of the present invention when the light present is insufficient, for example during the night.

## Claims

1. Device for loosening or screwing tight the fixing bolts of a wheel of a motor vehicle, which is directly coupled to the wheel, comprising a housing on whose interior part a reduction gear assembly is located, an actuating member (10, 10') of the first stage of said reduction gear assembly, an output shaft (8, 8'), detachably connected to a socket wrench (9, 9'), which engages a bolt of the wheel to be loosened or tightened, characterized in that it comprises connection means between said housing and wheel capable of rigidly connecting them to each other.

2. Device according to claim 1, characterized in that the connection means comprise a sleeve (6, 6') engaging a fixing bolt of the wheel, other than the bolt to be loosened or tightened.

3. Device according to claim 2, characterized in that the connection means comprise an arm (4, 4') whose length may be adjusted and which is connected to the device's housing, said arm (4, 4') being provided with said sleeve (6, 6') on its more remote end from said housing.

4. Device according to claims 1-3, characterized in that said sleeve (6) and said socket wrench (9) are disposed along the longitudinal symmetry axis of the housing.

5. Device according to anyone of the preceding claims, characterized in that the reduction gear assembly comprises a torque limiter.

6. Device according to claims 1, 2, 3, or 4, characterized in that said actuating member consists of a crank (10, 10'), which, by means of a connection element, is connected to a pinion (11) making up the first stage of the reduction gear assembly.

7. Device according to anyone of claims 1, 2, 3, 4, characterized in that the actuating member consists of an electrical motor whose shaft is coupled to said pinion (11).

8. Device according to any of the preceding claims, characterized in that the reduction gear assembly comprises besides the pinion (11), a bevel gear (17) which engages said pinion (11) and which is integral with a spindle (18), the latter being integral with a worm (20) which transmits its rotatory motion to a spur gear (21), the latter being integral with a second spur gear (22) located on the same axis and having a smaller radius, said second spur gear (22) transmitting its motion to a third spur gear (23) which makes up the last stage of the reduction gear assembly and which rotates the output shaft (8).

9. Device according to any of the preceding claims, characterized in that the torque limiter of the reduction gear assembly comprises an annular element (25) provided with a plurality of teeth (24) having a trapezoidal section, said teeth (24) engaging with a plurality of teeth (23a-23d) having a section like a right-angled triangle which are formed on one side of said third spur gear (23), the annular element compressing a plurality of cup springs (27) when a predetermined limit of the tightening torque is surpassed, the inclined surfaces of the teeth (23a-23d) integral with the spur gear sliding on the respective inclined surfaces of the teeth (24) having a trapezoidal section.
